# EUROPÄISCHE PATENTSCHRIFT

(11) **EP 3 131 993 B1**
(45) Veröffentlichungstag und Bekanntmachung des Hinweises auf die Patenterteilung: **10.06.2020**
(21) Anmeldenummer: 15718191.8
(22) Anmeldetag: 16.04.2015
(51) Int. Cl.: C09D 183/10, C07C 279/00, C08G 77/16, C08G 77/42, C09J 183/10

(54) **ZUSAMMENSETZUNG AUF BASIS VON SILANTERMINIERTEN POLYMEREN MIT CARBODIIMID-ADDITIVEN ZUR VERBESSERUNG DER MECHANISCHEN EIGENSCHAFTEN**
COMPOUND BASED ON SILANE-TERMINATED POLYMERS WITH CARBODIIMIDE ADDITIVES FOR IMPROVING THE MECHANICAL PROPERTIES
COMPOSITION À BASE DE POLYMÈRES FIXÉS PAR SILANE AVEC ADDITIFS DE CYANAMIDE DESTINÉE À AMÉLIORER DES PROPRIÉTÉS MÉCANIQUES

(30) Priorität: 16.04.2014 EP 14164919
(43) Veröffentlichungstag der Anmeldung: 22.02.2017
(73) Patentinhaber: Sika Technology AG, 6340 Baar (CH)
(72) Erfinder: FEDIER, Sara, CH-8305 Dietlikon (CH); CHOFFAT, Fabien, CH-4522 Rüttenen (CH)
(74) Vertreter: Sika Patent Attorneys
(86) Internationale Anmeldenummer: PCT/EP2015/058331
(87) Internationale Veröffentlichungsnummer: WO 2015/158862

(56) Entgegenhaltungen:
- EP-A1- 1 985 666
- EP-A1- 2 388 297
- FR-A1- 2 925 496

## Beschreibung

### Technisches Gebiet

Die Erfindung betrifft feuchtigkeitshärtende Zusammensetzungen auf Basis silanfunktioneller Polymere, welche sich als Klebstoffe, Dichtstoffe oder Beschichtungen eignen, für die Carbodiimide oder spezielle Carbodiimid-Derivate wie silanfunktionelle Guanidine eingesetzt werden, sowie deren Verwendung.

### Stand der Technik

Feuchtigkeitshärtende Zusammensetzungen auf Basis von silanfunktionellen Polymeren sind bekannt und werden seit geraumer Zeit als elastische Klebstoffe, Dichtstoffe und Beschichtungen eingesetzt.

Für zahlreiche Anwendungen ist es erforderlich, dass derartige Zusammensetzungen im ausgehärteten Zustand über weichelastische Eigenschaften und gute Haftungseigenschaften verfügen. Insbesondere wichtig sind eine hohe Dehnbarkeit und eine hohe Zugfestigkeit, ein niedriges Elastizitätsmodul (E-Modul), sowie ein hoher Weiterreisswiderstand. Diesen Anforderungen genügen bekannte Zusammensetzungen oft nicht.

Zur Herstellung von elastischen Zusammensetzungen mit niedrigem E-Modul werden verschiedene Ansätze verfolgt.

So beschreibt EP 1877459 A1 Zusammensetzungen umfassend ein silanfunktionelles Polymer und ein Aminosilan, denen α-funktionelle Organodialkoxysilane zugesetzt werden, um den E-Modul der ausgehärteten Zusammensetzung zu erniedrigen. Bei dieser Technik müssen jedoch hochreaktive und relativ kostspielige α-funktionelle Organodialkoxysilane eingesetzt werden.

WO 03/066701 A1 beschreibt Zusammensetzungen auf Basis von silanfunktionellen Polymeren umfassend Alkoxysilan- und Hydroxyl-Endgruppen aufweisende Polyurethanpolymere mit erniedrigter Funktionalität. Nachteilig ist aber die aufwendige Herstellung der Alkoxysilan- und Hydroxyl-Endgruppen aufweisenden Polyurethanpolymere.

In der WO 2011/023691 A1 wird eine Erniedrigung des E-Moduls von Zusammensetzungen umfassend silanfunktionelle Polymere durch Zugabe von speziellen Alkyltrialkoxysilanen erreicht. Allerdings führt die Zugabe dieser Silane auch zu einer Verringerung der Zugfestigkeit der gehärteten Systeme.

Das Dokument FR 2 925 496 A1 offenbart Zusammensetzungen, die ein Organopolysiloxan und einen Katalysator enthalten. Der Katalysator ist ein Silanhältiges Guanidin.

Bei den vorstehend genannten Systemen wird zwar der E-Modul erniedrigt, allerdings nimmt auch die Zugfestigkeit ab. Es ist ferner allgemein bekannt, dass die Zugabe von Aminosilanen die ausgehärteten Systeme härter macht. Dabei steigt aber der E-Modul und die Dehnung wird reduziert.

### Darstellung der Erfindung

Aufgabe der vorliegenden Erfindung ist es daher, eine feuchtigkeitshärtende Zusammensetzung auf Basis von silanfunktionellen Polymeren bereitzustellen, die die vorstehend erläuterten Nachteile des Standes der Technik überwindet. Insbesondere soll eine feuchtigkeitshärtende Zusammensetzung auf Basis von silanfunktionellen Polymeren bereitgestellt werden, welche im ausgehärteten Zustand über gute mechanische Eigenschaften und gute Haftungseigenschaften verfügt, wobei insbesondere ein tiefer Elastizitätsmodul (E-Modul) und gleichzeitig eine erhöhte oder zumindest gleichwertige Dehnbarkeit, Weiterreißfestigkeit und Zugfestigkeit erreicht werden soll. Dies soll auch erreicht werden, wenn freie Aminosilane in der Zusammensetzung enthalten sind. Überraschenderweise wurde gefunden, dass diese Aufgabe erreicht wird, wenn der Zusammensetzung auf Basis von silanfunktionellen Polymeren ein Carbodiimid nach Anspruch 1 als Additiv zugesetzt wird. Dabei kann das Carbodiimid als solches oder in Form eines Addukts mit einem Aminosilan zugesetzt werden, welches ein Guanidin darstellt.

Demgemäß betrifft die Erfindung eine Zusammensetzung, umfassend
a) mindestens ein silanfunktionelles Polymer; und
b) mindestens ein Carbodiimid und/oder mindestens ein Guanidin, welches ein Addukt aus dem Carbodiimid und mindestens einem Aminosilan ist, dadurch gekennzeichnet, dass das Carbodiimid ein Carbodiimid der Formel (I) des Anspruchs 1 ist, worin R¹ und R² unabhängig voneinander jeweils ein einwertiger aromatischer Kohlenwasserstoffrest mit 6 bis 50 C-Atomen sind.

Durch den Einsatz des Carbodiimids bzw. dessen Addukts mit einem Aminosilan kann der E-Modul von feuchtigkeitshärtenden Zusammensetzungen auf der Basis von silanfunktionellen Polymeren auf einfache Weise erniedrigt werden. Dies ist insbesondere auch dann der Fall, wenn die Zusammensetzung ein Aminosilan enthält. Die erfindungsgemäße Zusammensetzung verfügt somit im ausgehärteten Zustand über gute mechanische Eigenschaften und gute Haftungseigenschaften, wobei überraschenderweise gleichzeitig ein niedrigerer E-Modul, eine erhöhte Dehnbarkeit, eine gleich hohe oder erhöhte Zugfestigkeit und eine erhöhte Weiterreissfestigkeit in der gehärteten Zusammensetzung erreicht werden kann. Im Gegensatz zur Zugabe von Aminosilanen werden durch die Zugabe des Carbodiimids oder des Guanidins der E-Modul und die Shore A-Härte nicht erhöht, sondern erniedrigt.

Sofern ein Carbodiimid als solches eingesetzt wird, ist teilweise eine verlängerte Hautbildungszeit zu beobachten. Ohne sich an eine Theorie binden zu wollen, wird vermutet, dass der Grund hierfür darin liegt, dass das Carbodiimid mit in der Zusammensetzung gegebenenfalls vorhandenem Aminosilan reagieren kann. Die Reduktion der Hautbildungszeit kann vermieden werden, wenn das Carbodiimid vorgängig mit einem Aminosilan unter Bildung eines Addukts umgesetzt wird, wobei die vorstehend genannten Verbesserungen bezüglich E-Modul, Dehnung und Zugfestigkeit ebenfalls erreicht werden. Die Erfindung betrifft auch die neuen Addukte aus mindestens einem Carbodiimid und mindestens einem Aminosilan, bei denen es sich um Guanidine handelt, und die Verwendung des Carbodiimids oder des Addukts in einer Zusammensetzung umfassend mindestens ein silanfunktionelles Polymer.

Ferner betrifft die Erfindung die Verwendung der erfindungsgemäßen Zusammensetzungen als Klebstoff, Dichtstoff oder Beschichtung und die sich aus der Härtung der Zusammensetzung mit Wasser, bevorzugt in Form von Luftfeuchtigkeit, ergebende gehärtete Zusammensetzung. Besonders bevorzugte Ausführungsformen der Erfindung sind Gegenstand der abhängigen Ansprüche. Im Folgenden wird die Erfindung ausführlich erläutert.

### Weg zur Ausführung der Erfindung

Mit "Poly" beginnende Substanznamen wie Polyol, Polyamin oder Polyisocyanat bezeichnen Substanzen, die formal zwei oder mehr der in ihrem Namen vorkommenden funktionellen Gruppen pro Molekül enthalten.

Die Begriffe "Silan" bzw. "Organosilan" bezieht sich auf Siliciumverbindungen, welche mindestens eine, üblicherweise zwei oder drei, direkt an das Siliciumatom gebundene hydrolysierbare Gruppen, vorzugsweise Alkoxygruppen oder Acyloxygruppen, aufweisen, und mindestens einen, über eine Si-C-Bindung, direkt an das Siliciumatom gebundenen organischen Rest aufweisen. Derartige Silane sind dem Fachmann auch als Organoalkoxysilane oder Organoacyloxysilane bekannt, sofern die hydrolysierbare Gruppe eine Alkoxy- bzw. Acyloxygruppe ist.

Der Ausdruck "Silangruppe" bezeichnet einen Substituenten einer Verbindung, bei der ein Silan über den über die Si-C-Bindung gebundenen organischen Rest des Silans an die Verbindung angebunden ist. Die Silane bzw. deren Silangruppen haben die Eigenschaft, bei Kontakt mit Wasser bzw. Feuchtigkeit zu hydrolysieren. Dabei bilden sich Organosilanole, bei denen die hydrolysierbaren Gruppen des Silans bzw. der Silangruppe zumindest teilweise zu Silanolgruppen (Si-OH-Gruppen) hydrolysieren. Diese Silanolgruppen sind chemisch reaktiv und kondensieren in der Regel spontan untereinander unter Bildung von Siloxangruppen (Si-O-Si-Gruppen), wobei Wasser abgespalten wird.

Als "Aminosilane" bzw. "Mercaptosilane" werden Silane bzw. Organosilane bezeichnet, deren organischer Rest mindestens eine Aminogruppe bzw. mindestens eine Mercaptogruppe aufweist. Aminosilane, die zwei solcher Aminogruppen aufweisen, werden auch als Diaminosilane bezeichnet. Als "primäre Aminosilane" werden Aminosilane bezeichnet, welche eine primäre Aminogruppe (NH₂-Gruppe) aufweisen, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Ein Kohlenwasserstoffrest ist ein Rest, der aus Kohlenstoff und Wasserstoff besteht, wobei der Kohlenstoff als Einzelatom, Kette oder Ring oder einer Kombination davon vorliegen kann. Der Kohlenwasserstoffrest kann aliphatisch, cycloaliphatisch oder aromatisch oder eine Kombination davon sein. Beispiele sind Alkyl-, Alkenyl-, Alkinyl-, Cycloalkyl-, Cycloalkenyl- und aromatische Gruppen oder Kombinationen davon für einwertige Kohlenwasserstoffreste bzw. die analogen zweiwertigen Kohlenwasserstoffreste.

Heteroatome sind Atome, die nicht Kohlenstoff oder Wasserstoff sind. Beispiele sind Sauerstoff, Schwefel, Stickstoff und Phosphor. Kohlenwasserstoffreste, die mindestens ein Heteroatom enthalten, können das Heteroatom, wie O oder N, insbesondere als -O- bzw. =N- oder -NH-, z.B. in einer Kette oder einem Ring, aufweisen. Die Heteroatome können eine funktionelle Gruppe bilden, z.B. eine primäre, sekundäre oder tertiäre Aminogruppe.

Silanfunktionelle und Isocyanat-funktionelle Polymere bezeichnet Polymere, die mindestens eine, bevorzugt mindestens zwei der genannten funktionellen Gruppen im Polymer enthalten. Bevorzugt handelt es sich um silanterminierte oder Isocyanat-terminierte Polymere, d.h. die Polymere weisen endständige Silan- bzw. eine Isocyanatgruppen auf.

Ein Addukt ist ein Additionsprodukt, welches durch eine Additionsreaktion von Ausgangsverbindungen erhältlich ist.

Unter "Raumtemperatur" (RT) wird hier eine Temperatur von 23 °C verstanden.

Unter mittlerem Molekulargewicht wird hier das Zahlenmittel des Molekulargewichts (Mn) verstanden, welches bestimmt werden kann durch Gelpermeationschromatographie (GPC), wobei folgende Mittel und Bedingungen verwendet wurden: Säulen: PSS Suprema, 30 Å und 1000 Å (2x), (0.8 x 30 cm, 10µm); Eluent: H₂O 0,067 M Na₂HPO₄; Durchsatz: 1 mL/min; Temperatur: 30 °C; Kalibrierung: Relativ zu Polyethylenoxid (PEO); Standard: ReadyCal-Kit PEO 1'960 - 478'000 g/mol; Detektion: Brechungsindexdetektor; Injektionsvolumen: 100 µL. Zur Probenherstellung wurden etwa 100 mg der trockenen Probe in 10 ml Eluent über Nacht gelöst. Bei einer wässrigen Probe wird der Wasseranteil berücksichtigt. Die Lösung wird durch ein 0,45 µm Membranfilter aus regenerierter Cellulose filtriert, um ein Verstopfen der Säule zu verhindern.

Eine gestrichelte Linie in den Formeln in diesem Dokument stellt jeweils die Bindung zwischen einem Substituenten und dem zugehörigen Molekülrest dar.

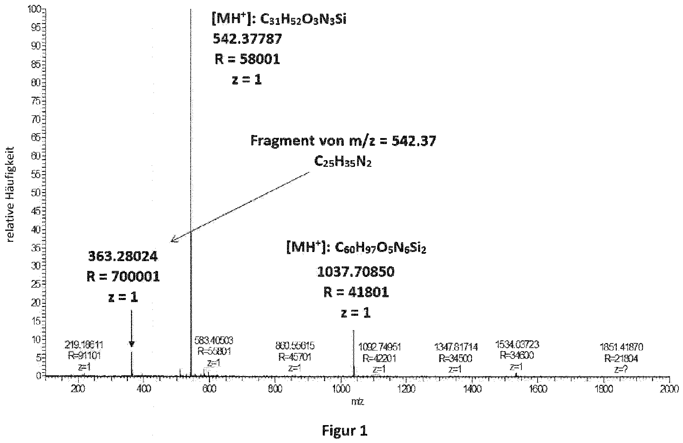

Figur 1 zeigt ein Massenspektrum für ein Addukt aus Bis-(2,6-diisopropylphenyl)carbodiimid und Aminopropyltrimethoxysilan.

Die erfindungsgemäße Zusammensetzung umfasst mindestens ein silanfunktionelles Polymer. Silanfunktionelle Polymere sind Polymere, in der Regel organische Polymere, die mindestens eine, in der Regel zwei oder mehr, Silangruppen aufweisen, wobei die Silangruppen 1 bis 3, bevorzugt 2 oder 3, und besonders bevorzugt 3, hydrolysierbare Gruppen, bevorzugt Alkoxy- oder Acyloxygruppen, aufweisen. Die Silangruppen können als Seitengruppen und/oder bevorzugt als Endgruppen vorliegen. Solche silanfunktionelle Polymere werden für Kleb- oder Dichtstoffe in großem Umfang eingesetzt. Silanfunktionelle Polymere werden auch als silanterminierte Polymere (STP) oder silanmodifizierte Polymere (SMP) bezeichnet.

Das silanfunktionelle Polymer weist bevorzugt mindestens eine, bevorzugt zwei oder mehr, besonders bevorzugt zwei, Gruppen, bevorzugt Endgruppen, der Formel (II) auf, 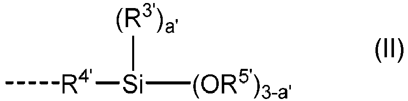 worin
R^{3'} unabhängig voneinander ein linearer oder verzweigter, einwertiger Kohlenwasserstoffrest mit 1 bis 8 C-Atomen, bevorzugt ein linearer oder verzweigter Alkylrest mit 1 bis 8 C-Atomen, insbesondere eine Methyl- oder eine Ethylgruppe, ist;
R^{4'} ein linearer oder verzweigter, zweiwertiger Kohlenwasserstoffrest mit 1 bis 12 C-Atomen, welcher gegebenenfalls cyclische Anteile und/oder gegebenenfalls ein oder mehrere Heteroatome, insbesondere ein oder mehrere Stickstoffatome, aufweist, bevorzugt eine lineare oder verzweigte Alkylengruppe mit 1 bis 8 C-Atomen, bevorzugt 2 bis 6 C-Atomen, die gegebenenfalls ein oder mehrere Stickstoffatome aufweist, z.B. als -NH-, besonders bevorzugt eine 1,3-Propylengruppe, ist;
R^{5'} unabhängig voneinander ein Acylrest, bevorzugt ein Acetylrest, oder ein linearer oder verzweigter, einwertiger Kohlenwasserstoffrest mit 1 bis 5 C-Atomen, insbesondere eine lineare oder verzweigte Alkylgruppe mit 1 bis 5 C-Atomen, bevorzugter eine Methyl-, Ethyl- oder Isopropylgruppe, ist; und
a' 0 oder 1 oder 2, bevorzugt 0 oder 1, insbesondere 0, ist.

Innerhalb einer Gruppe der Formel (II) stehen R^{3'} und R^{5'} jeweils unabhängig voneinander für die beschriebenen Reste. So sind beispielsweise auch Verbindungen mit Gruppen der Formel (II) möglich, welche Ethoxydimethoxysilan-Gruppen (R^{5'} = Methyl, R^{5'} = Methyl, R^{5'} = Ethyl) sind.

Besonders bevorzugt handelt es sich bei der Gruppe, bevorzugt Endgruppe, der Formel (II) um eine Gruppe, in der
R^{3'} unabhängig voneinander eine Methylgruppe oder eine Ethylgruppe ist;
R^{4'} eine lineare Alkylengruppe mit 1 bis 5 C-Atomen, bevorzugt 2 bis 5 C-Atomen, insbesondere eine 1,3-Propylengruppe, ist;
R^{5'} unabhängig voneinander eine Methyl-, Ethyl- oder Isopropylgruppe, bevorzugt eine Methylgruppe, ist; und
a' 0 oder 1, bevorzugt 0, ist.

Das silanfunktionelle Polymer ist vorzugsweise frei von Isocyanatgruppen. Es kann sich um irgendein übliches organisches Polymer, bevorzugt ein lineares organisches Polymer, handeln, welches Silangruppen aufweist. Beispiele sind silanfunktionelle Polyurethan-, Polyharnstoff-, Polyacrylat-, Polymethacrylat- und Polyetherpolymere, wobei silanfunktionelle Polyurethanpolymere und silanfunktionelle Polyetherpolymere bevorzugt sind.

In einer ersten Ausführungsform kann das silanfunktionelle Polymer ein silanfunktionelles Polyurethanpolymer sein, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan der Formel (III'), 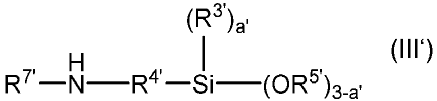 wobei R^{3'}, R^{4'}, R^{5'} und a' bereits vorhergehend für die Formel (II) beschrieben worden sind, so dass auf die dortigen Definitionen, einschließlich der bevorzugten Ausführungsformen verwiesen werden kann, und R^{7'} ein Wasserstoffatom oder ein cyclischer, linearer oder verzweigter, einwertiger Kohlenwasserstoffrest mit 1 bis 20 C-Atomen ist oder für einen Rest der Formel (IV) steht, 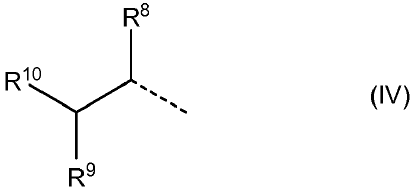 worin
R⁸ und R⁹ jeweils unabhängig voneinander für ein Wasserstoffatom oder ein Rest aus der Gruppe bestehend aus -R¹¹, -COOR¹¹ und -CN sind;
R¹⁰ ein Wasserstoffatom oder ein Rest aus der Gruppe bestehend aus -CH₂-COOR¹¹, -COOR¹¹, -CONHR¹¹, -CON(R¹¹)₂, -CN, -NO₂, -PO(OR¹¹)₂, -SO₂R¹¹ und -SO₂OR¹¹ ist;
R¹¹ unabhängig voneinander ein Kohlenwasserstoffrest mit 1 bis 20 C-Atomen ist, der gegebenenfalls mindestens ein Heteroatom aufweist.

Beispiele für geeignete Aminosilane sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureester, (Meth)acrylsäureamide, Maleinsäure- und Fumarsäurediester, Citraconsäurediester oder Itaconsäurediester, insbesondere N-(3-Trimethoxysilyl-propyl)-aminobernsteinsäuredimethyl- oder -diethylester; sowie Analoga der genannten Aminosilane mit Ethoxy- oder Isopropoxygruppen anstelle der Methoxygruppen am Silicium. Als Aminosilane besonders geeignet sind sekundäre Aminosilane, insbesondere Aminosilane, bei denen R^{7'} in Formel (III) verschieden von H ist. Bevorzugt sind die Michael-artigen Addukte, insbesondere N-(3-Trimethoxysilylpropyl)-aminobernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Bevorzugt wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0,1 bis 5 Gew.-%, bevorzugt 0,1 bis 2,5 Gew.-%, besonders bevorzugt 0,2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1,5:1 bis 2,2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0,02 mEq/g und mit einem mittleren Molekulargewicht im Bereich von 1'000 bis 30'000 g/mol, sowie Polyoxyethylendiole, Polyoxyethylentriole, Polyoxypropylendiole und Polyoxypropylentriole mit einem mittleren Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie z.B. solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure oder Terephthalsäure als Dicarbonsäure, oder aus Lactonen wie beispielsweise ε-Caprolacton, und aus Ethylenglykol, Diethylenglykol, Neopentylglykol, 1,4-Butandiol, 1,6-Hexandiol, Dimerfettsäurediol oder 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® (früher Hycar®) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1,6 bis 3 auf.

Besonders geeignete Polyole sind Polyesterpolyole und Polyetherpolyole, insbesondere Polyoxyethylenpolyole, Polyoxypropylenpolyole oder Polyoxypropylenpolyoxyethylenpolyole, bevorzugt Polyoxyethylendiole, Polyoxypropylendiole, Polyoxyethylentriole, Polyoxypropylentriole, Polyoxypropylenpolyoxyethylendiole oder Polyoxypropylenpolyoxyethylentriole.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Das silanfunktionelle Polymer kann in einer zweiten Ausführungsform ein silanfunktionelles Polyurethanpolymer sein, welches erhältlich ist durch die Umsetzung eines Isocyanatosilans mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Als Isocyanatosilan geeignet sind Verbindungen der Formel (V), 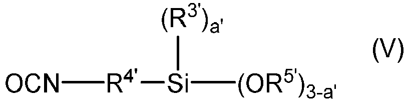 wobei R^{3'}, R^{5'}, R^{4'} und a' bereits vorhergehend für die Formel (II) beschrieben worden sind, so dass auf die dortigen Definitionen, einschließlich der bevorzugten Ausführungsformen verwiesen werden kann.

Beispiele für geeignete Isocyanatosilane der Formel (V) sind Isocyanatomethyltrimethoxysilan, Isocyanatomethyldimethoxymethylsilan, 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf. Als Hydroxylgruppen aufweisende Polymere eignen sich z.B. einerseits bereits genannte hochmolekulare Polyoxyalkylenpolyole, bevorzugt Polyoxypropylendiole mit einem Ungesättigtheitsgrad tiefer als 0,02 mEq/g und mit einem mittleren Molekulargewicht im Bereich von 4'000 bis 30'000 g/mol, insbesondere solche mit einem mittleren Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen der Formel (V). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanats im stöchiometrischen Überschuss vorhanden sind. Bevorzugt ist ein Verhältnis von Hydroxylgruppen zu Isocyanatgruppen von 1,3:1 bis 4:1, insbesondere von 1,8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers verwendet wird.

In einer dritten Ausführungsform kann das silanfunktionelle Polymer ein silanfunktionelles Polyetherpolymer sein, welches erhältlich ist durch eine Hydrosilylierungsreaktion von Polymeren mit endständigen Doppelbindungen, beispielsweise Poly(meth)acrylatpolymeren oder Polyetherpolymeren, insbesondere von allylterminierten Polyoxyalkylenpolymeren, die z.B. beschrieben sind in US 3,971,751 und US 6,207,766

Geeignete kommerziell erhältliche silanfunktionelle Polymere sind insbesondere erhältlich unter den Markennamen MS Polymer™ (von Kaneka; Typen S203H, S303H, S227, S810, MA903 und S943), MS Polymer™ bzw. Silyl™ (von Kaneka; Typen SAT010, SAT030, SAT200, SAX350, SAX400, SAX725, MAX450, MAX951), Excestar® (von Asahi Glass Co.; Typen S2410, S2420, S3430, S3630), SPUR+* (von Momentive Performance Materials; Typen 1010LM, 1015LM, 1050MM), Vorasil™ (von Dow Chemical; Typen 602 und 604), Desmoseal® (von Bayer Material Science; Typen S XP 2458, S XP 2636, S XP 2749, S XP 2774 und S XP 2821), TEGOPAC® (von Evonik; Typen Seal 100, Bond 150, Bond 250), Polymer ST (von Hanse Chemie, Typen 47, 48, 61, 61LV, 77, 80, 81) und Geniosil® STP (von Wacker Chemie; Typen E10, E15, E30, E35).

Die erfindungsgemäße Zusammensetzung umfasst mindestens ein Carbodiimid und/oder mindestens ein Guanidin, welches ein Addukt aus dem Carbodiimid und mindestens einem Aminosilan ist. Das Carbodiimid weist jeweils einen organischen Substituenten an den beiden Stickstoffatomen auf und entspricht der Formel (I) des Anspruchs 1.

Diese Carbodiimide haben einen ausgeprägten Einfluss auf die mechanischen Eigenschaften der ausgehärteten Zusammensetzung in der beschriebenen Art und Weise.

Es können ein oder mehrere Carbodiimide verwendet werden.

Das Carbodimid ist ein Carbodiimid der Formel (I)

R¹-N=C=N-R² (I)

worin R¹ und R² unabhängig voneinander jeweils ein einwertiger aromatischer Kohlenwasserstoffrest mit 6 bis 50 C-Atomen, bevorzugt 6 bis 30 C-Atomen, besonders bevorzugt 6 bis 18 C-Atomen, sind.

Die Substituenten R¹ und R² können gleich oder verschieden voneinander sein und sind unabhängig voneinander. In der Regel ist es bevorzugt, dass R¹ und R² gleich sind.

Bevorzugt steht R¹ für 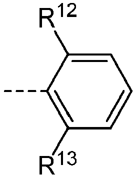 und R² für 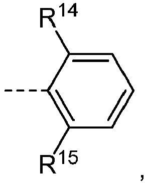 worin R¹², R¹³, R¹⁴ und R¹⁵ unabhängig voneinander jeweils ein Wasserstoffatom oder ein linearer oder verzweigter Alkylrest mit 2 bis 20 C-Atomen oder ein Cycloalkylrest mit 2 bis 20 C-Atomen oder ein Arylrest mit 6 bis 15 C-Atomen oder ein Aralkylrest mit 7 bis 14 C-Atomen sind.

Ein bevorzugtes Carbodiimid der Formel (I) weist dememtsprechend die Formel (Ia) auf 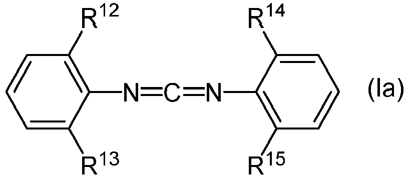 worin R¹², R¹³, R¹⁴ und R¹⁵ die genannten Bedeutungen aufweisen.

Bevorzugte Reste R¹² bis R¹⁴ sind unabhängig voneinander jeweils Ethyl, Propyl, Isopropyl, sec.Butyl, tert.Butyl, Cyclohexyl, Dodecyl, Phenyl, Tolyl, Benzyl oder Naphtyl.

Das Carbodiimid kann nach üblichen, dem Fachmann bekannten Verfahren hergestellt werden. Im allgemeinen sind Carbodiimide als Handelsprodukte erhältlich.

Kommerziell erhältliche Carbodiimide der Formel (la) sind insbesondere Hycasyl®100, Hycasyl®1001, Additin® RC 8500, Stabaxol® I und Stabaxol® I LF (alle von RheinChemie Rheinau GmbH, Deutschland), Stabilisator 3000, 7000 und 7000 A (alle von Rasching, Deutschland).

Besonders bevorzugt ist ein Carbodiimid der Formel (la), bei welchem die Reste R¹², R¹³, R¹⁴ und R¹⁵ jeweils Isopropyl sind. Es wird auch als Bis(2,6-diisopropylphenyl)carbodiimid bezeichnet.
Es ist kommerziell erhältlich, z.B. als Hycasyl®100 oder Hycasyl®1001 von Rhein Chemie Rheinau GmbH, Deutschland. Sowohl bei Hycasyl®100 als auch bei Hycasyl®1001 handelt es sich um Bis (2,6-diisopropylphenyl)carbodiimid, wobei Hycasyl®100 noch geringe Mengen (etwa 0,2 Gew.-%) an Diisopropylphenylisocyanat enthält. Beide Produkte können im Sinne der Erfindung als Carbodiimid eingesetzt werden, wobei im wesentlichen gleiche Ergebnisse erzielt werden.

Das Carbodiimid kann als solches oder alternativ in Form eines Addukts des Carbodiimids mit einem Aminosilan eingesetzt werden.

Für den Fall, dass das Carbodiimid als solches eingesetzt wird, enthält die Zusammensetzung bevorzugt mindestens ein Aminosilan, insbesondere ein Aminosilan, wie es auch zur Umsetzung mit dem Carbodiimid geeignet ist, insbesondere ein Aminosilan der Formel (III), wie nachfolgend beschrieben.

Für den Fall, dass das Carbodiimid als Addukt mit einem Aminosilan eingesetzt wird, ist in der Zusammensetzung ein Guanidin, nämlich das Addukt, vorhanden.

Das Aminosilan zur Adduktierung mit dem Carbodiimid kann ein primäres oder ein sekundäres Aminosilan sein, wobei ein primäres Aminosilan bevorzugt ist.

Für das Addukt aus dem Carbodiimid und einem Aminosilan wird bevorzugt ein Aminosilan der Formel (III) verwendet, 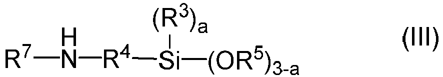 worin
R³ unabhängig voneinander ein linearer oder verzweigter, einwertiger Kohlenwasserstoffrest mit 1 bis 8 C-Atomen, insbesondere eine Methylgruppe, ist; R⁴ ein linearer oder verzweigter, zweiwertiger Kohlenwasserstoffrest mit 1 bis 12 C-Atomen, welcher gegebenenfalls cyclische Anteile und/oder gegebenenfalls ein oder mehrere Heteroatome, insbesondere ein oder mehrere Stickstoffatome, aufweist, bevorzugt eine lineare oder verzweigte Alkylengruppe mit 1 bis 8 C-Atomen, die gegebenenfalls ein oder mehrere Stickstoffatome aufweist, ist;
R⁵ unabhängig voneinander ein linearer oder verzweigter, einwertiger Kohlenwasserstoffrest mit 1 bis 5 C-Atomen, insbesondere eine Methyl-, eine Ethyl- oder eine Isopropylgruppe, ist;
R⁷ ein Wasserstoffatom oder ein einwertiger Kohlenwasserstoffrest mit 1 bis 12 C-Atomen, der gegebenenfalls Ethergruppen, Estergruppen, Nitrilgruppen, Aminogruppen oder Silangruppen enthält, ist; und
a 0 oder 1 oder 2, bevorzugt 0 oder 1, insbesondere 0, ist.

Bevorzugt stehen in Formel (III)
a für 0 oder 1, insbesondere für 0;
R³ für eine Methylgruppe;
R⁴ für eine lineare Alkylengruppe mit 1 bis 5, bevorzugt 2 bis 5, C-Atomen, gegebenenfalls mit einer sekundären Aminogruppe, insbesondere eine 1,3-Propylengruppe oder eine 3-Aza-1,6-hexylengruppe;
R⁵ unabhängig voneinander für eine Methyl- oder eine Ethyl- oder eine Isopropylgruppe, insbesondere eine Methyl- oder eine Ethylgruppe; und R⁷ für ein Wasserstoffatom.

Besonders bevorzugte Aminosilane zur Herstellung des Addukts sind primäre Aminosilane wie 3-Aminopropyltrimethoxysilan, 3-Aminopropyltriethoxysilan, 3-Aminopropyldimethoxymethylsilan, 3-Aminopropyldiethoxymethylsilan, N-(2-Aminoethyl)-3-aminopropyltrimethoxysilan oder N-(2-Aminoethyl)-3-aminopropyltriethoxysilan, wobei 3-Aminopropyltrimethoxy- oder -triethoxysilan am meisten bevorzugt sind.

Beispiele für weitere geeignete Aminosilane zur Herstellung des Addukts sind N-(2-Aminoethyl)-3-aminopropyl-methyldimethoxysilan, N-Butyl-3-aminopropyl-trimethoxysilan, N-Phenyl-3-aminopropyltrimethoxysilan, sowie die Produkte aus der Michael-artigen Addition von primären Aminosilanen wie 3-Aminopropyltrimethoxysilan an Michael-Akzeptoren, wie z.B. N-(3-Trimethoxysilyl-propyl)-aminobernsteinsäurediethylester, die bereits vorstehend bezüglich des Einsatzes der Aminosilane der Formel (III') für die Herstellung der silanfunktionellen Polymere im Einzelnen erläutert wurden, worauf Bezug genommen wird.

Beim Addukt aus dem Carbodiimid und dem Aminosilan handelt es sich bevorzugt um ein Guanidin der Formel (VI) und/oder ein Tautomer davon, 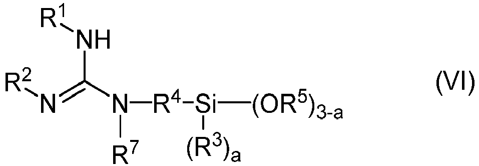 worin R¹, R², R³, R⁴, R⁵, R⁷ und a die bereits beschriebenen Bedeutungen aufweisen.

Es ist bekannt, dass Guanidine der Tautomerie unterliegen können, wobei sich die Position des oder der Wasserstoffe am Stickstoff und damit verbunden die Position der Doppelbindung in der Guanidinstruktur verändern können. Diese Tautomere können miteinander im Gleichgewicht vorliegen, welches von der Art der Substituenten abhängt. Daher schließt jede angegebene Guanidin-Verbindung auch die tautomeren Formen ein.

Besonders bevorzugt sind in der Formel (VI),
a 0 oder 1, insbesondere 0;
R⁴ eine lineare Alkylengruppe mit 1 bis 5 C-Atomen, bevorzugt 2 bis 5 C-Atomen, gegebenenfalls mit einer sekundären Aminogruppe, insbesondere eine 1,3-Propylengruppe oder eine 3-Aza-1,6-hexylengruppe;
R⁵ unabhängig voneinander eine Methyl- oder eine Ethyl- oder eine Isopropylgruppe, insbesondere eine Methyl- oder eine Ethylgruppe;
R⁷ ein Wasserstoffatom; und
R¹ und R² jeweils 2,6-Diisopropylphenyl.

Das Addukt aus dem Carbodiimid und einem Aminosilan, welches ein Guanidin darstellt, kann in einfacher Weise hergestellt werden, z.B. indem man das Carbodiimid mit dem Aminosilan vermischt, zweckmäßigerweise z.B. in einem molaren Verhältnis von etwa 1:1, und die Mischung bevorzugt bei erhöhter Temperatur rührt, z.B. 40°C oder mehr, bevorzugt unter inerter Atmosphäre, gegebenenfalls in Anwesenheit von Katalyatoren, bis sich das Guanidin gebildet hat. Das Carbodiimid und Aminosilan können z.B. 12 h bei 80 °C unter Stickstoffatmosphäre gerührt werden, um das Addukt bzw. Guanidin zu erhalten. Das erhaltene Produkt kann ohne weitere Aufbereitung weiter verwendet werden.

Ebenfalls möglich ist die Herstellung des Adduktes in Anwesenheit des silanfunktionellen Polymers, wobei das silanfunktionelle Polymer, das Aminosilan und das Carbodiimid und gegebenenfalls weitere Bestandteil der Zusammensetzung vermischt und erwärmt werden.

Bei der Herstellung des Guanidins bzw. Addukts können als Nebenprodukte auch kondensierte Silanverbindungen entstehen, wobei es sich dabei um relativ geringe Mengen handelt.

Die Zusammensetzung kann gegebenenfalls ein oder mehrere Additive enthalten.

Bei den Additiven kann es sich um Additive handeln, die für silanfunktionelle Polymere enthaltende Zusammensetzungen üblich sind, insbesondere auf dem Gebiet der Klebstoffe und Dichtstoffe. Beispiele für geeignete optionale Additive sind Füllstoffe, Weichmacher, ein oder mehrere Silane als Haftvermittler, Trocknungsmittel oder Co-Katalysatoren, und Katalysatoren.

Die Zusammensetzung umfasst vorzugsweise mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung.

Geeignete Füllstoffe sind anorganische und organische Füllstoffe, z.B. natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Weiterhin enthält die erfindungsgemäße Zusammensetzung bevorzugt mindestens einen Katalysator für die Vernetzung von silanfunktionellen Polymeren mittels Wasser bzw. Feuchtigkeit. Derartige Katalysatoren sind insbesondere Metall-Katalysatoren und/oder basische Stickstoff- oder Phosphorverbindungen.

Mögliche Metall-Katalysatoren sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.

Mögliche basische Stickstoff- oder Phosphorverbindungen sind insbesondere Imidazole, Pyridine, Phosphazen-Basen oder bevorzugt Amine, Aminosilane, Hexahydrotriazine, Biguanide, Amidine oder Guanidine, wie insbesondere 1,4-Diazabicyclo[2.2.2]octan, 1,8-Diazabicyclo[5.4.0]undec-7-en (DBU) oder 1,5-Diazabicyclo[4.3.0]non-5-en (DBN), oder Mischungen der genannten Katalysatoren.

Ferner kann die Zusammensetzung bevorzugt ein oder mehrere Silane, z.B. ausgewählt aus Vinylsilanen, Methacryloxysilanen, Aminosilanen und Carbamatosilanen, enthalten. Diese werden z.B. als Haftvermittler, Trocknungsmittel oder Co-Katalysatoren eingesetzt. Beispiele sind Epoxysilane, (Meth)acryl-silane, Anhydridosilane oder Addukte der vorgenannten Silane mit primären Aminosilanen, sowie Aminosilane oder Harnstoffsilane, die als Haftvermittler eingesetzt werden; Vinyltrimethoxysilan, α-funktionelle Silane wie N-(Silylme-thyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- oder N-Alkylsilane, die ebenfalls als Trocknungsmittel eingesetzt werden.

In einer bevorzugten Ausführungsform umfasst die Zusammensetzung ein Aminosilan, insbesondere ein Aminosilan der vorstehend erläuterten Formel (III). Besonders bevorzugt ist ein Aminosilan der Formel (III), worin R⁷ ein Wasserstoffatom ist, insbesondere 3-Aminopropyltrimethoxysilan, 3-Aminopropyltriethoxysilan, 3-Aminopropyldimethoxymethylsilan, 3-Aminopropyldiethoxymethylsilan, N-(2-Aminoethyl)-3-aminopropyltrimethoxysilan oder N-(2-Aminoethyl)-3-aminopropyltriethoxysilan.

Besonders bevorzugt handelt es sich um ein Aminosilan der Formel (III), in der R³ eine Methylgruppe ist;
R⁴ eine lineare Alkylengruppe mit 1 bis 5 C-Atomen, bevorzugt 2 bis 5 C-Atomen, gegebenenfalls mit einer sekundären Aminogruppe, insbesondere eine 1,3-Propylengruppe oder eine 3-Aza-1,6-hexylengruppe, ist;
R⁵ unabhängig voneinander eine Methyl- oder eine Ethylgruppe ist;
R⁷ ein Wasserstoffatom ist; und
a 0 oder 1, bevorzugt 0, ist.

Sofern in der Zusammensetzung das Addukt vorhanden ist, kann das Aminosilan, d.h. das freie Aminosilan, und das für das Addukt eingesetzte Aminosilan gleich oder verschieden sein.

Weiterhin kann die erfindungsgemäße Zusammensetzung zusätzlich weitere Additive enthalten. Beispielsweise sind derartige Additive Weichmacher wie Ester organischer Carbonsäuren oder deren Anhydride, wie Phthalate, insbesondere Dioctylphthalat, Diisononylphthalat oder Diisodecylphthalat, Diester von ortho-Cyclohexandicarbonsäure, insbesondere Diisononyl-1,2-cyclohexan-dicarboxylat, Adipate, insbesondere Dioctyladipat, Azelate und Sebacate, Polyole, insbesondere Polyoxyalkylenpolyole oder Polyesterpolyole, organische Phosphor- und Sulfonsäureester oder Polybutene; Lösungsmittel; Fasern, z.B. aus Polyethylen; Farbstoffe; Pigmente; Vernetzer, wie z.B. silanfunktionelle Oligo- und Polymere; Rheologiemodifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; andere Trocknungsmittel, wie Orthoameisensäureester, Calciumoxid oder Molekularsiebe; Biozide wie Algizide, Fungizide oder das Pilzwachstum hemmende Substanzen; sowie weitere üblicherweise in feuchtigkeitshärtenden Zusammensetzungen eingesetzte Additive.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Sofern in der Zusammensetzung ein Carbodiimid in nicht umgesetzter Form, vorzugsweise ein Carbodiimid der Formel (I), insbesondere der Formel (la), enthalten ist, liegt der Anteil an Carbodiimid vorzugsweise im Bereich von 0,1 bis 5,0 Gew.-%, bevorzugt 0,1 bis 2,0 Gew.-%, bezogen auf das Gesamtgewicht der Zusammensetzung.

Sofern in der Zusammensetzung ein Aminosilan, insbesondere ein Aminosilan der Formel (III), und Carbodiimid in nicht umgesetzter Form in die Zusammensetzung gegeben wird, ist das molare Verhältnis von Carbodiimid, vorzugsweise ein Carbodiimid der Formel (I), insbesondere der Formel (la), in der Zusammensetzung zu Aminosilan vorzugsweise im Bereich von 0,5 bis 1, bevorzugter von 0,8 bis 1.

Sofern in der Zusammensetzung ein Guanidin, vorzugsweise ein Guanidin der Formel (VI), enthalten ist, liegt der Anteil an Guanidin vorzugsweise im Bereich von 0,5 bis 6 Gew.-%, bevorzugt 4 bis 5 Gew.-%, bezogen auf das Gesamtgewicht der Zusammensetzung.

Der Anteil der weiteren Komponenten kann ebenfalls in weiten Bereichen variieren. Im Folgenden werden bevorzugte Mengenangaben einiger weiteren Komponenten angegeben.

Üblicherweise ist das silanfunktionelle Polymer in der Zusammensetzung z.B. in einer Menge von 10 bis 80 Gew.-%, insbesondere in einer Menge von 15 bis 70 Gew.-%, bevorzugt 20 bis 50 Gew.-%, bezogen auf die gesamte Zusammensetzung, vorhanden.

Eine geeignete Menge Füllstoff liegt z.B. im Bereich von 15 bis 70 Gew.-%, bevorzugt 20 bis 65 Gew.-%, bezogen auf die gesamte Zusammensetzung.

Die Menge an Weichmacher kann z.B. im Bereich von 0 bis 30 Gew.-%, bezogen auf die gesamte Zusammensetzung, liegen. Die Menge an einem oder mehreren Silanen, z.B. ausgewählt aus Vinylsilanen, Methacryloxysilanen, Aminosilanen, einschließlich der Aminosilane der Formel (III'), und Carbamatosilanen, kann z.B. im Bereich von 0,1 bis 10 Gew.-%, bezogen auf die gesamte Zusammensetzung, liegen. Die Menge an Katalysator kann z.B. im Bereich von 0,001 bis 5 Gew.-%, bezogen auf die gesamte Zusammensetzung, liegen, wobei bei Einsatz von Organozinn-Katalysatoren die Menge vorzugsweise im Bereich von 0,001 bis 1 Gew.-% liegt und bei Einsatz von Titanat-Katalysatoren die Menge vorzugsweise im Bereich von 0,5 bis 5 Gew.-% liegt.

Es ist von Vorteil, dass die für die Zusammensetzung eingesetzten Komponenten kein oder höchstens Spuren von Wasser enthalten oder beim Lagern freisetzen. Dadurch werden vorzeitige Härtungsreaktionen in der Zusammensetzung vermieden und die Lagerstabilität erhöht. Deshalb kann es sinnvoll sein, gewisse Bestandteile vor dem Einmischen in die Zusammensetzung chemisch oder physikalisch zu trocknen.

Die erfindungsgemäße Zusammensetzung wird vorzugsweise unter Ausschluss von Feuchtigkeit hergestellt und aufbewahrt. Typischerweise ist die Zusammensetzung lagerstabil, d.h., sie kann unter Ausschluss von Feuchtigkeit in einer geeigneten Verpackung oder Anordnung über einen Zeitraum von z.B. mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation der erfindungsgemäßen Zusammensetzung, z.B. als Klebstoff oder Dichtstoff oder Beschichtung auf mindestens einen Festkörper oder Artikel oder in eine Fuge, kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den optionalen Einsatz von Katalysatoren beschleunigt werden können, härtet die Zusammensetzung schliesslich aus. Dieser Prozess wird auch als Vernetzung bezeichnet.

Das für die Aushärtung benötigte Wasser kann entweder aus der Luft stammen, d.h. Luftfeuchtigkeit, oder die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt und verlangsamt sich in der Regel mit dem Fortschreiten der Aushärtung.

Die erfindungsgemäße Zusammensetzung ist insbesondere als feuchtigkeitshärtender Klebstoff oder Dichtstoff oder als feuchtigkeitshärtende Beschichtung, insbesondere als Baudichtstoff, geeignet. Die Zusammensetzung eignet sich insbesondere bei Bauanwendungen zum Abdichten oder Verfugen. Bevorzugt ist die Verwendung als weichelastischer Baudichtstoff für Anschluss- oder Dilatationsfugen. Ein solcher Dichtstoff weist vorteilhaft ein niedriges E-Modul auf.

Die erfindungsgemäße Zusammensetzung wird z.B. verwendet in einem Verfahren des Verklebens zweier Substrate umfassend die Schritte
i) Applikation der Zusammensetzung auf ein erstes Substrat und/oder ein zweites Substrat;
ii) Kontaktieren der Substrate über die applizierte Zusammensetzung innerhalb der Offenzeit der Zusammensetzung;
iii) Aushärtung der Zusammensetzung mittels Wasser, bevorzugt in Form von Luftfeuchtigkeit.
Als "Offenzeit" wird dabei die Zeitspanne zwischen dem Kontakt der Zusammensetzung mit Feuchtigkeit und den Ausbilden einer Haut auf der Oberfläche der Zusammensetzung bezeichnet. Diese Zeitspanne wird auch als "Hautbildungszeit" bezeichnet und kann bestimmt werden wie in den Beispielen angegeben.

Die erfindungsgemäße Zusammensetzung kann auch verwendet werden in einem Verfahren der Abdichtung oder des Beschichtens umfassend die Schritte
i') Applikation der Zusammensetzung auf ein Substrat und/oder zwischen zwei Substrate oder in eine Fuge;
ii') Aushärtung der Zusammensetzung mittels Wasser, bevorzugt in Form von Luftfeuchtigkeit.

Die Substrate, die verklebt, abgedichtet und/oder beschichtet werden, können, sofern mehr als ein Substrat vorliegt, gleich oder verschieden sein. Es können alle üblichen Materialien verwendet werden. Geeignete Substrate sind z.B. ausgewählt aus Beton, Mörtel, Backstein, Ziegel, Gips, Naturstein wie Granit oder Marmor, Glas, Glaskeramik, Metall oder Metalllegierung, Holz, Kunststoff oder Lack.

Die erfindungsgemäße Zusammensetzung weist bevorzugt eine pastöse Konsistenz mit strukturviskosen Eigenschaften auf. Eine solche Zusammensetzung kann mittels einer geeigneten Vorrichtung auf ein Substrat aufgetragen werden, bevorzugt in Form einer Raupe, wobei diese vorteilhaft eine im wesentlichen runde oder dreieckige Querschnittsfläche aufweist.

Weiterhin betrifft die Erfindung eine gehärtete Zusammensetzung, welche erhältlich ist aus einer erfindungsgemäßen Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemäßen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

Weiterhin betrifft die Erfindung die vorstehend beschriebenen Guanidine aus der Addition eines Carbodiimids mit einem Aminosilan sowie die Verwendung der Carbodiimide oder der Guanidine in Zusammensetzungen umfassend silanfunktionelle Polymere zur Erhöhung der Elastizität und Zugfestigkeit und zur Erniedrigung des E-Moduls dieser Zusammensetzungen im ausgehärteten Zustand. Die Verbesserungen beziehen sich dabei auf den Vergleich entsprechender feuchtigkeitshärtender Zusammensetzungen, die kein Carbodiimid oder Guanidin gemäß der Erfindung enthalten.

### Beispiele

Die folgenden Beispiele erläutern die Erfindung weiter, wobei sie die Erfindung in keiner Weise beschränken sollen. Sofern nicht anders angegeben, beziehen sich alle Mengen- und Prozentangaben auf das Gewicht.

### Testverfahren

Die Zugfestigkeit, die Bruchdehnung, und der Elastizitätsmodul (E-Modul) bei 0-100 % Dehnung wurden nach DIN EN 53504 (Zuggeschwindigkeit: 200 mm/min) an während 14 Tagen bei 23 °C und 50 % relativer Luftfeuchtigkeit ausgehärteten Filmen mit einer Schichtdicke von 2 mm bestimmt.

Die Shore A-Härte wurde bestimmt nach DIN 53505, an während 14 Tagen bei 23 °C und 50 % relativer Luftfeuchtigkeit ausgehärteten Probekörpern mit einer Schichtdicke von 6 mm.

Die Hautbildungszeit wurde einen Tag (Lagerung bei RT) nach der Herstellung geprüft. Die Hautbildungszeit (Zeit bis zur Klebefreiheit, "tack-free time") wurde bei 23 °C und 50 % relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Der Weiterreisswiderstand wurde bestimmt nach DIN 53515, an während 14 Tagen bei 23 °C und 50 % relativer Luftfeuchtigkeit ausgehärteten Filmen mit einer Schichtdicke von 2 mm.

Für die Bestimmung der Auspresskraft wurden die Zusammensetzungen nach der Herstellung in innenlackierte Aluminiumkartuschen (Durchmesser außen 46,9 mm, Durchmesser innen 46,2 mm Länge 215 mm, Öffnung 15-M) gefüllt und mit einem Polyethylen-Stopfen (Durchmesser 46,1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 3 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Ferner werden folgende Abkürzungen für eingesetzte Ausgangskomponenten verwendet:

| DIDP | Jayflex DIDP (Diisodecylphthalat) | Exxon Mobil Chemical |
|---|---|---|
| A-171 | Silquest® A-171 (Vinyltrimethoxysilan) | Momentive Performance Materials Inc., USA |
| Socal | Socal® U1S2 (getrocknete gefällte Stearat-beschichtete Kreide) | Solvay SA, Belgien, |
| Omya | Omyacarb® 5-GU (nicht getrocknete gemahlene Kreide) | Omya AG, Schweiz |
| A-1110 | Silquest® A-1110 (Aminopropyltrimethoxysilan) | Momentive Performance Materials Inc., USA |
| K712 | Metatin® K712 (Di-n-butyl-zinndilaurat) als 2,5 %-ige Lösung in DIDP | Acima AG, Schweiz |
| Hyc1001 | Hycasyl® 1001 (Bis(2,6-diisopropylphenyl)-carbodiimid) | RheinChemie Rheinau GmbH, Deutschland |
| DIC | N,N'-Diisopropylcarbodiimid | Sigma-Aldrich |

### Herstellung eines Guanidins aus einem Carbodiimid und einem Aminosilan

Das Addukt Guanidin **G1** wurde hergestellt, indem 10,0 g Aminopropyltrimethoxysilan (A 1110) und 20,2 Bis(2,6-diisopropylphenyl)carbodiimid (Hycasyl® 1001, von RheinChemie Rheinau GmbH, Deutschland) bei 80°C während 12 h unter Stickstoffatmosphäre gerührt wurden. Das erhaltene Guanidin **G1** wurde ohne weitere Aufarbeitung in den weiteren Versuchen und Messungen verwendet.

Die chemische Struktur des vorstehend hergestellten Guanidins **G1** aus Bis-(2,6-diisopropylphenyl)carbodiimid und Aminopropyltrimethoxysilan wurde mittels Fliessinjektions-Massenspektrometrie (FIMS) unter den folgenden Bedingungen untersucht:

| | |
|---|---|
| Instrument: | LTQ-Orbitrap XL |
| Auflösung: | 60000 |
| Tune: | APCIHF400_178.05_Geniosil XL63.LTQTune |
| Verdampfertemperatur: | 300 °C |
| Mantelgas-Fließrate: | 25 (arb) |
| Hilfsgas-Fließrate: | 5 (arb) |
| Spülgas-Fließrate: | 0 (arb) |
| Entladungsstrom: | 5 µA |
| Kapillartemperatur: | 275 °C |
| Kapillarspannung: | 30 V |
| Tubuslinsen-Spannung: | 70 V |

Die Addukt-Probe wurde mit Acetonitril (ACN) gelöst und verdünnt (100 µg/mL). Mit einer konstanten Träger-Fließrate von 400 µL/min (ACN), wurde die Probenlösung mit einer 500 µL Spritze direkt in das Massenspektrometer mit 10 µL/min (APCI, positiver Ionen-Modus) eingespritzt. Das erhaltene Massenspektrum ist in Figur 1 gezeigt.

Das Massenspektrum zeigt ein intensives Signal bei m/z = 542,37787. Auf Basis der gemessenen genauen Masse wurde eine chemische Formel von C₃₁H₅₁O₃N₃Si und 9 Ring-Doppelbindungs-Äquivalenten für das neutrale Molekül berechnet. Dies bestätigt die nachfolgende Struktur für das erhaltene Produkt.

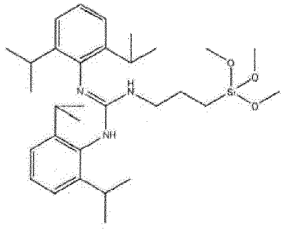

Ferner wurde im Massenspektrum ein Nebenprodukt bei m/z = 1037,70850 ermittelt. Auf Basis der gemessenen genauen Masse wurde eine chemische Formel von C₆₀H₉₆O₅N₆Si₂ und 18 Ring-Doppelbindungs-Äquivalenten berechnet. Dies bestätigt die nachfolgende dimere Struktur für das Nebenprodukt.

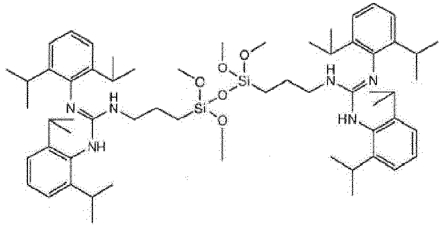

### Herstellung des silanfunktionellen Polymers SH

Unter Stickstoffatmosphäre wurden 700 g Polyol Acclaim® 12200 (Bayer MaterialScience AG, Deutschland; low monol Polyoxypropylendiol; OH-Zahl 11,0 mg KOH/g; Wassergehalt ca. 0.02 Gew.-%), 29,8 g Isophorondiisocyanat (Vestanat® IPDI, Evonik Degussa GmbH, Deutschland), 85 g 2,2,4-Trimethyl-1,3-pentandioldiisobutyrat (Eastman TXIB™; Eastman Chemical Company, USA) und 0,1 g Di-*n*-butyl-zinndilaurat (Metatin® K 712, Acima AG, Schweiz) unter stetigem Rühren auf 90 °C aufgeheizt und bei dieser Temperatur belassen. Nach einer Stunde Reaktionszeit wurde mittels Titration ein freier Gehalt an Isocyanatgruppen von 0,63 Gew.-% erreicht. Anschliessend wurden 43,17 g N-(3-Trimethoxysilylpropyl)-aminobernsteinsäure-diethylester beigefügt und für weitere 2 bis 3 Stunden bei 90 °C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur abgekühlt und unter Ausschluss von Feuchtigkeit aufbewahrt (theoretischer Polymergehalt 90 Gew.%). Das so hergestellte silanfunktionelle Polymer **SH** ist bei Raumtemperatur flüssig. N-(3-Trimethoxysilyl-propyl)-amino-bernsteinsäure-diethylester wurde wie folgt hergestellt: 51,0 g 3-Aminopropyl-trimethoxysilan (A-1110) wurden vorgelegt. Unter gutem Rühren wurden bei Raumtemperatur langsam 49,0 g Maleinsäurediethylester (Fluka Chemie GmbH, Schweiz) zugegeben und die Mischung während 2 Stunden bei Raumtemperatur gerührt.

### Herstellung der Klebstoffe/Dichtstoffe (für Beispiele 1-9)

In einem Vakuummischer wurden entsprechend den in den nachstehenden Tabellen 1, 3, und 5 angegebenen Gewichtsteilen das vorstehend hergestellte silanfunktionelle Polymer **SH** und DIDP (Jayflex DIDP, Exxon Mobil Chemical, Deutschland) und Vinyltrimethoxysilan (Silquest® A-171 von Momentive Performance Materials Inc., USA) während 5 Minuten gut vermischt. Anschliessend wurden die gefällte Stearat-beschichtete Kreide (Socal® U1S2, Solvay SA, Belgien) und die gemahlene ungetrocknete Kreide (Omyacarb® 5-GU, Omya AG, Schweiz) während 15 Minuten bei 60 °C eingeknetet. Bei ausgeschalteter Heizung wurden anschliessend Aminopropyltrimethoxysilan (A-1110) sowie gegebenenfalls Carbodiimid oder Guanidin und Katalysator (Metatin® K712 als 2,5 %-ige Lösung in DIDP) unter Vakuum während 10 Minuten zu einer homogenen Paste verarbeitet. Diese wurde dann in innenlackierte Aluminium-Spreizkolbenkartuschen abgefüllt.

### Beispiele 1 bis 2

Die in Tabelle 1 angegebenen Komponenten wurden in den dort angegebenen Mengenanteilen gemäß der vorstehenden Vorschrift zur Herstellung der Klebstoffe/Dichtstoffe verarbeitet, um eine Zusammensetzung auf Basis eines silanfunktionellen Polymers enthaltend ein Carbodiimid herzustellen. Beispiel 1 ist ein Referenzbeispiel.

**Tabelle 1 (Angaben in Gew.-Teilen)**

| | | Bsp. 1* | Bsp. 2 | Bsp. 2a |
|---|---|---|---|---|
| Polymer | **SH** | 30 | 30 | 30 |
| Weichmacher | DIDP | 15 | 15 | 15 |
| Trockenmittel | A-171 | 1,0 | 1,0 | 1,0 |
| Füllstoff 1 | Socal | 25,0 | 25,0 | 25,0 |
| Füllstoff 2 | Omya | 25,0 | 25,0 | 25,0 |
| Haftvermittler | A-1110 | 0,5 | 0,5 | 0,5 |
| Carbodiimid | Hyc1001 | - | 0,5 | - |
| | DIC | - | - | 0,5 |
| Katalysator | K712 | 2,5 | 2,5 | 2,5 |

| | | | | |
|---|---|---|---|---|
| *Referenzbeispiel | | | | |

Die Beispiele 1 bis 2 wurden anschließend mit vorstehend angegebenen Messmethoden untersucht. Die Ergebnisse sind in Tabelle 2 angeführt.

**Tabelle 2**

| | | | Bsp. 1* | Bsp. 2 | Bsp. 2a |
|---|---|---|---|---|---|
| Zugfestigkeit | [MPa] | 14d RT | 1,6 | 1,6 | 1,3 |
| Bruchdehnung | [%] | 14d RT | 380 | 550 | 420 |
| Weiterreisswiderstand | [N/mm] | 14d RT | 5,0 | 5,5 | 4,4 |
| E-Modul 0-100% | [MPa] | 14d RT | 0,77 | 0,63 | 0,66 |
| Auspresskraft (3mm) | [N] | 1d RT | 300 | 350 | 340 |
| ShoreA | | 14d RT | 41 | 37 | 40 |

| | | | | | |
|---|---|---|---|---|---|
| *Referenzbeispiel | | | | | |

Es zeigt sich, dass die ein aromatisches Carbodiimid enthaltende Zusammensetzung (Bsp. 2) eine gleichhohe Zugfestigkeit, eine höhere Bruchdehnung, einen höheren Weiterreisswiderstand und einen niedrigeren E-Modul als das Referenzbeispiel ohne Carbodiimid (Bsp. 1) aufwies. Das Beispiel 2a mit einem aliphatischen Carbodiimid wies ebenfalls eine höhere Bruchdehnung und einen niedrigeren E-Modul auf als das Referenzbeispiel ohne Carbodiimid (Bsp. 1) auf, wobei Zugfestigkeit und Weiterreisswiderstand gegenüber diesem reduziert waren.

### Beispiele 3 bis 7

Die in Tabelle 3 angegebenen Komponenten wurden in den dort angegebenen Mengenanteilen gemäß der vorstehenden Vorschrift zur Herstellung der Klebstoffe/Dichtstoffe verarbeitet, um eine Zusammensetzung auf Basis eines silanfunktionellen Polymers enthaltend ein Guanidin herzustellen. Beispiel 1 ist ein Referenzbeispiel. In den Beispielen 3 bis 7 wurde das vorstehend hergestellte Guanidin **G1** in unterschiedlichen Mengenverhältnissen (1, 2, 3, 4 bzw. 5 Gew.-%) eingesetzt. Die Beispiele 3 bis 7 wurden anschließend mit vorstehend angegebenen Messmethoden untersucht. Die Ergebnisse sind in Tabelle 4 angeführt.

Durch die Zugabe des Guanidins werden Shore A und der E-Modul erniedrigt. Zugfestigkeit, Dehnung und Weiterreisswiderstand nehmen deutlich zu.

**Tabelle 3 (Mengenangaben in Gew.-Teilen)**

| | | Bsp. 1* | Bsp. 3 | Bsp. 4 | Bsp. 5 | Bsp. 6 | Bsp. 7 |
|---|---|---|---|---|---|---|---|
| Polymer | **SH** | 30 | 30 | 30 | 30 | 30 | 30 |
| Weichmacher | DIDP | 15 | 15 | 14 | 13 | 12 | 11 |
| Trockenmittel | A-171 | 1,0 | 1,0 | 1,0 | 1,0 | 1,0 | 1,0 |
| Füllstoff 1 | Socal | 25,0 | 25,0 | 25,0 | 25,0 | 25,0 | 25,0 |
| Füllstoff 2 | Omya | 25,0 | 25,0 | 25,0 | 25,0 | 25,0 | 25,0 |
| Haftvermittler | A-1110 | 0,5 | 0,5 | 0,5 | 0,5 | 0,5 | 0,5 |
| Guanidin | **G1** | - | 1,0 | 2,0 | 3,0 | 4,0 | 5,0 |
| Katalysator | K712 | 2,5 | 2,5 | 2,5 | 2,5 | 2,5 | 2,5 |

| | | | | | | | |
|---|---|---|---|---|---|---|---|
| * Referenzbeispiel | | | | | | | |

**Tabelle 4**

| | | | Bsp. 1* | Bsp. 3 | Bsp. 4 | Bsp.5 | Bsp. 6 | Bsp. 7 |
|---|---|---|---|---|---|---|---|---|
| Zugfestigkeit | [MPa] | 14d RT | 1,6 | 1,7 | 1,9 | 1,8 | 1,9 | 2.0 |
| Bruchdehnung | [%] | 14d RT | 380 | 460 | 550 | 540 | 590 | 640 |
| Weiterreisswiderstand | [N/mm] | 14d RT | 5.0 | 5,8 | 6,9 | 8.0 | 9,0 | 9,7 |
| E-Modul 0-100% | [MPa] | 14d RT | 0,77 | 0,71 | 0,69 | 0,64 | 0,62 | 0,59 |
| Hautbildungszeit | [min] | 1d RT | 90 | 55 | 50 | 45 | 40 | 35 |
| Auspresskraft | [N] | 1d RT | 300 | 250 | 250 | 280 | 200 | 250 |
| Shore A | | 14d RT | 41 | 39 | 38 | 37 | 32 | 34 |

| | | | | | | | | |
|---|---|---|---|---|---|---|---|---|
| * Referenzbeispiel | | | | | | | | |

### Beipiele 8 bis 9

Die in Tabelle 5 angegebenen Komponenten wurden in den dort angegebenen Mengenanteilen gemäß der vorstehenden Vorschrift zur Herstellung der Klebstoffe/Dichtstoffe verarbeitet, um eine Zusammensetzung auf Basis eines silanfunktionellen Polymers enthaltend ein Guanidin herzustellen. Das vorstehend hergestellte Guanidin **G1** und der Haftvermittler wurden in unterschiedlichen Mengenverhältnissen eingesetzt. Die Beispiele 8 bis 9 wurden anschließend mit vorstehend angegebenen Messmethoden untersucht. Die Ergebnisse sind in Tabelle 6 angeführt. Die Beispiele 1, 3 und 5 wurden zum Vergleich ebenfalls in den Tabellen aufgenommen. Die Beispiele 1, 8 und 9 sind Referenzbeispiele.

Durch die Zugabe des Guanidins wird der E-Modul verringert, bei höherer Zugfestigkeit und höherem Weiterreisswiderstand.
Die Vergleichsbeispiele mit zusätzlichem Aminosilan zeigen hingegen einen erhöhten E-Modul bei tieferer Dehnung.

**Tabelle 5 (Mengenangaben in Gew.Teilen)**

| | | Bsp. 1* | Bsp. 8* | Bsp. 3 | Bsp. 9* | Bsp. 5 |
|---|---|---|---|---|---|---|
| Polymer | **SH** | 30 | 30 | 30 | 30 | 30 |
| Weichmacher | DIDP | 15 | 15 | 15 | 13 | 13 |
| Trockenmittel | A-171 | 1,0 | 1,0 | 1,0 | 1,0 | 1,0 |
| Füllstoff 1 | Socal | 25,0 | 25,0 | 25,0 | 25,0 | 25,0 |
| Füllstoff 2 | Omya | 25,0 | 25,0 | 25,0 | 25,0 | 25,0 |
| Haftvermittler | A-1110 | 0,5 | 0,5 | 0,5 | 0,5 | 0,5 |
| Guanidin | **G1** | - | - | 1,0 | - | 3,0 |
| Zusatz | A-1110 | - | 1,0 | - | 3,0 | - |
| Katalysator | K712 | 2,5 | 2,5 | 2,5 | 2,5 | 2,5 |

| | | | | | | |
|---|---|---|---|---|---|---|
| * Referenzbeispiel | | | | | | |

**Tabelle 6**

| | | | Bsp. 1* | Bsp. 8* | Bsp. 3 | Bsp. 9* | Bsp. 5 |
|---|---|---|---|---|---|---|---|
| Zugfestigkeit | [MPa] | 14d RT | 1,6 | 1,7 | 1,7 | 1,7 | 1,8 |
| Bruchdehnung | [%] | 14d RT | 380 | 210 | 460 | 100 | 540 |
| Weiterreisswiderstand | [N/mm] | 14d RT | 5.0 | 4,7 | 5,8 | 3,8 | 8.0 |
| E-Modul 0-100% | [MPa] | 14d RT | 0,77 | 1,08 | 0,71 | 1,54 | 0,64 |
| Hautbildungszeit | [min] | 1d RT | 90 | 20 | 55 | 15 | 45 |
| Auspresskraft | [N] | 1d RT | 300 | 230 | 250 | 220 | 280 |
| Shore A | | 14d RT | 41 | 45 | 39 | 53 | 37 |

| | | | | | | | |
|---|---|---|---|---|---|---|---|
| * Referenzbeispiel | | | | | | | |

## Patentansprüche

1. Zusammensetzung umfassend
a) mindestens ein silanfunktionelles Polymer; und
b) mindestens ein Carbodiimid und/oder mindestens ein Guanidin, welches ein Addukt aus dem Carbodiimid und mindestens einem Aminosilan ist,
**dadurch gekennzeichnet, dass**
das Carbodiimid ein Carbodiimid der Formel (I) ist
R¹-N=C=N-R² (I)
worin R¹ und R² unabhängig voneinander jeweils ein einwertiger aromatischer Kohlenwasserstoffrest mit 6 bis 50 C-Atomen sind.

2. Zusammensetzung nach Anspruch 1, **dadurch gekennzeichnet, dass** R¹ für 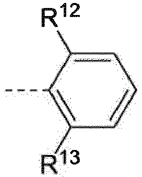 und R² für 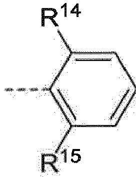 steht, worin
R¹², R¹³, R¹⁴ und R¹⁵ unabhängig voneinander jeweils ein Wasserstoffatom oder ein linearer oder verzweigter Alkylrest mit 2 bis 20 C-Atomen oder ein Cycloalkylrest mit 2 bis 20 C-Atomen oder ein Arylrest mit 6 bis 15 C-Atomen oder ein Aralkylrest mit 7 bis 14 C-Atomen sind.

3. Zusammensetzung nach einem der vorhergehenden Ansprüche, **dadurch gekennzeichnet, dass** das Carbodiimid Bis(2,6-diisopropylphenyl)carbodiimid ist.

4. Zusammensetzung nach einem der vorhergehenden Ansprüche, **dadurch gekennzeichnet, dass** das Aminosilan für das Addukt ein Aminosilan der Formel (III) ist, 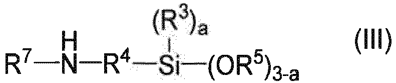 worin
R³ unabhängig voneinander ein linearer oder verzweigter, einwertiger Kohlenwasserstoffrest mit 1 bis 8 C-Atomen, insbesondere eine Methylgruppe, ist;
R⁴ ein linearer oder verzweigter, zweiwertiger Kohlenwasserstoffrest mit 1 bis 12 C-Atomen, welcher gegebenenfalls cyclische Anteile und/oder gegebenenfalls ein oder mehrere Heteroatome, insbesondere ein oder mehrere Stickstoffatome, aufweist, ist;
R⁵ unabhängig voneinander ein linearer oder verzweigter, einwertiger Kohlenwasserstoffrest mit 1 bis 5 C-Atomen, insbesondere eine Methyl-, eine Ethyl- oder eine Isopropylgruppe, ist;
R⁷ ein Wasserstoffatom oder ein einwertiger Kohlenwasserstoffrest mit 1 bis 12 C-Atomen, der gegebenenfalls Ethergruppen, Estergruppen, Nitrilgruppen, Aminogruppen oder Silangruppen enthält, ist; und
a 0 oder 1 oder 2, bevorzugt 0 oder 1, insbesondere 0, ist.

5. Zusammensetzung nach Anspruch 4, **dadurch gekennzeichnet, dass** a 0 oder 1, insbesondere 0, ist;
R³ eine Methylgruppe ist;
R⁴ eine lineare Alkylengruppe mit 1 bis 5, bevorzugt 2 bis 5, C-Atomen, gegebenenfalls mit einer sekundären Aminogruppe, insbesondere eine 1,3-Propylengruppe oder eine 3-Aza-1,6-hexylengruppe, ist;
R⁵ unabhängig voneinander eine Methyl- oder eine Ethyl- oder eine Isopropylgruppe, insbesondere eine Methyl- oder eine Ethylgruppe, ist; und R⁷ ein Wasserstoffatom ist.

6. Zusammensetzung nach einem der vorhergehenden Ansprüche, **dadurch gekennzeichnet, dass** die Zusammensetzung, die ein Carbodiimid umfasst, zusätzlich mindestens ein Aminosilan, insbesondere mindestens ein Aminosilan der Formel (III), umfasst.

7. Zusammensetzung nach einem der vorhergehenden Ansprüche, **dadurch gekennzeichnet, dass** das Guanidin ein Guanidin der Formel (VI) und/oder ein Tautomer davon ist, 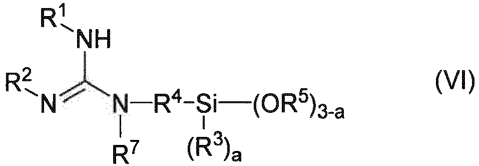 und R¹ und R² wie im Carbodiimid der Formel (I) definiert sind und R³, R⁴, R⁵, R⁷ und a wie im Aminosilan der Formel (III) definiert sind.

8. Zusammensetzung nach einem der vorhergehenden Ansprüche, **dadurch gekennzeichnet, dass** das silanfunktionelle Polymer Endgruppen der Formel (II) aufweist 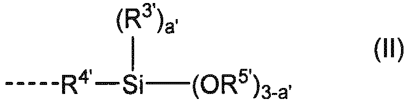 worin
R^{3'} unabhängig voneinander ein linearer oder verzweigter, einwertiger Kohlenwasserstoffrest mit 1 bis 8 C-Atomen, insbesondere eine Methyl- oder eine Ethylgruppe, ist;
R^{4'} ein linearer oder verzweigter, zweiwertiger Kohlenwasserstoffrest mit 1 bis 12 C-Atomen, welcher gegebenenfalls cyclische Anteile und/oder gegebenenfalls ein oder mehrere Heteroatome, insbesondere ein oder mehrere Stickstoffatome, aufweist, bevorzugt eine lineare oder verzweigte Alkylengruppe mit 1 bis 8 C-Atomen, die gegebenenfalls ein oder mehrere Stickstoffatome aufweist, ist;
R^{5'} unabhängig voneinander ein Acylrest, bevorzugt ein Acetylrest, oder ein linearer oder verzweigter, einwertiger Kohlenwasserstoffrest mit 1 bis 5 C-Atomen, insbesondere eine Methyl-, eine Ethyl- oder eine Isopropylgruppe, ist; und
a' 0, 1 oder 2, bevorzugt 0 oder 1, insbesondere 0, ist.

9. Zusammensetzung nach einem der vorhergehenden Ansprüche, **dadurch gekennzeichnet, dass** die Zusammensetzung ein feuchtigkeitshärtender Klebstoff oder Dichtstoff, insbesondere ein Baudichtstoff, oder eine feuchtigkeitshärtende Beschichtung ist.

10. Zusammensetzung nach einem der vorhergehenden Ansprüche, **dadurch gekennzeichnet, dass** die Zusammensetzung, bezogen auf die gesamte Zusammensetzung, 10 bis 80 Gew.-%, bevorzugt 15 bis 70 Gew.-%, silanfunktionelles Polymer, 15 bis 70 Gew.-%, bevorzugt 20 bis 65 Gew.-%, Füllstoff, 0 bis 30 Gew.-% Weichmacher, 0,1 bis 10 Gew.-% eines oder mehrerer Silane und 0,001 bis 5 Gew.-% Katalysator enthält.

11. Guanidin der Formel (VI), wobei die Formel (VI) wie in Anspruch 7 definiert ist.

12. Verfahren zur Herstellung eines Guanidins nach einem der Ansprüche 7 oder 11, indem mindestens ein Carbodiimid und mindestens ein Aminosilan in Gegenwart eines silanfunktionellen Polymers zu einem Addukt umgesetzt werden.

13. Verwendung eines Carbodiimids oder eines Guanidins nach Anspruch 1, welches ein Addukt aus einem Carbodiimid und einem Aminosilan ist, in einer Zusammensetzung, umfassend mindestens ein silanfunktionelles Polymer, insbesondere zur Erniedrigung des E-Moduls dieser Zusammensetzung im ausgehärteten Zustand.

14. Gehärtete Zusammensetzung, erhältlich aus der Härtung einer Zusammensetzung nach einem der Ansprüche 1 bis 10 mit Wasser, insbesondere in Form von Luftfeuchtigkeit.

## Claims

1. Composition comprising
a) at least one silane-functional polymer; and
b) at least one carbodiimide and/or at least one guanidine which is an adduct of the carbodiimide and at least one aminosilane,
**characterized in that**
the carbodiimide is a carbodiimide of the formula (I)
R¹-N=C=N-R² (I)
where R¹ and R² are each independently a monovalent aromatic hydrocarbon radical having 6 to 50 carbon atoms.

2. Composition according to Claim 1, **characterized in that** R¹ is 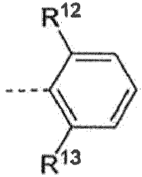 and R² is 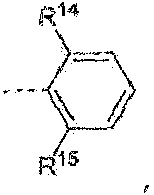 where
R¹², R¹³, R¹⁴ and R¹⁵ are each independently a hydrogen atom or a linear or branched alkyl radical having 2 to 20 carbon atoms or a cycloalkyl radical having 2 to 20 carbon atoms or an aryl radical having 6 to 15 carbon atoms or an aralkyl radical having 7 to 14 carbon atoms.

3. Composition according to either of the preceding claims, **characterized in that** the carbodiimide is bis(2,6-diisopropylphenyl)carbodiimide.

4. Composition according to any of the preceding claims, **characterized in that** the aminosilane for the adduct is an aminosilane of the formula (III), 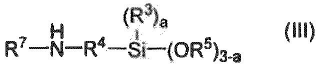 where
R³ is each independently a linear or branched monovalent hydrocarbon radical having 1 to 8 carbon atoms, especially a methyl group;
R⁴ is a linear or branched divalent hydrocarbon radical having 1 to 12 carbon atoms optionally comprising cyclic moieties and/or optionally comprising one or more heteroatoms, especially one or more nitrogen atoms;
R⁵ is each independently a linear or branched monovalent hydrocarbon radical having 1 to 5 carbon atoms, especially a methyl, an ethyl or an isopropyl group;
R⁷ is a hydrogen atom or a monovalent hydrocarbon radical having 1 to 12 carbon atoms, optionally comprising ether groups, ester groups, nitrile groups, amino groups or silane groups; and a is 0 or 1 or 2, preferably 0 or 1, especially 0.

5. Composition according to Claim 4, **characterized in that**
a is 0 or 1, especially 0;
R³ is a methyl group;
R⁴ is a linear alkylene group having 1 to 5, preferably 2 to 5 carbon atoms, optionally having a secondary amino group, especially a 1,3-propylene group or a 3-aza-1,6-hexylene group;
R⁵ is each independently a methyl or an ethyl or an isopropyl group, especially a methyl or an ethyl group; and
R⁷ is a hydrogen atom.

6. Composition according to any of the preceding claims, **characterized in that** the composition comprising a carbodiimide additionally comprises at least one aminosilane, especially at least one aminosilane of the formula (III).

7. Composition according to any of the preceding claims, **characterized in that** the guanidine is a guanidine of the formula (VI) and/or a tautomer thereof, 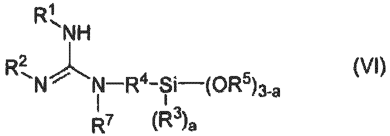 and R¹ and R² are defined as in the carbodiimide of the formula (I) and R³, R⁴, R⁵, R⁷ and a are defined as in the aminosilane of the formula (III).

8. Composition according to any of the preceding claims, **characterized in that** the silane-functional polymer comprises end groups of the formula (II) 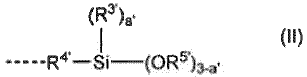 where
R^{3'} is each independently a linear or branched monovalent hydrocarbon radical having 1 to 8 carbon atoms, especially a methyl or an ethyl group;
R^{4'} is a linear or branched divalent hydrocarbon radical having 1 to 12 carbon atoms, optionally comprising cyclic moieties and/or optionally
comprising one or more heteroatoms, especially one or more nitrogen atoms, preferably a linear or branched alkylene group having 1 to 8 carbon atoms optionally comprising one or more nitrogen atoms; R^{5'} is each independently an acyl radical, preferably an acetyl radical, or a linear or branched monovalent hydrocarbon radical having 1 to 5 carbon atoms, especially a methyl, an ethyl or an isopropyl group; and
a' is 0, 1 or 2, preferably 0 or 1, especially 0.

9. Composition according to any of the preceding claims, **characterized in that** the composition is a moisture-curing adhesive or sealant, especially a construction sealant, or a moisture-curing coating.

10. Composition according to any of the preceding claims, **characterized in that** the composition, based on the total composition, comprises 10 to 80% by weight, preferably 15 to 70% by weight silane-functional polymer, 15 to 70% by weight, preferably 20 to 65% by weight filler, 0 to 30% by weight plasticizer, 0.1 to 10% by weight of one or more silanes and 0.001 to 5% by weight catalyst.

11. Guanidine of the formula (VI), wherein the formula (VI) is defined as in Claim 7.

12. Method for preparing a guanidine according to either of Claims 7 or 11, by reacting at least one carbodiimide and at least one aminosilane in the presence of a silane-functional polymer to give an adduct.

13. Use of a carbodiimide or a guanidine according to Claim 1, which is an adduct composed of a carbodiimide and an aminosilane, in a composition comprising at least one silane-functional polymer, particularly for lowering the E-modulus of this composition in the cured state.

14. Cured composition, obtainable from curing a composition according to any of Claims 1 to 10 with water, especially in the form of air humidity.

## Revendications

1. Composition comprenant
a) au moins un polymère fonctionnalisé par silane ; et
b) au moins un carbodiimide et/ou au moins une guanidine, qui est un adduit du carbodiimide et d'au moins un aminosilane,
**caractérisée en ce que** le carbodiimide est un carbodiimide de formule (I)
**R¹-N=C=N-R²** **(I)**
dans laquelle R¹ et R² indépendamment l'un de l'autre à chaque fois sont un radical hydrocarboné aromatique monovalent comportant 6 à 50 atomes de C.

2. Composition selon la revendication 1, **caractérisée en ce que** R¹ représente 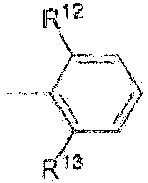 et R² représente 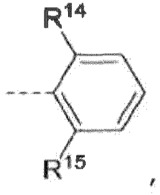 dans lesquels R¹², R¹³, R¹⁴ et R¹⁵ indépendamment les uns des autres à chaque fois sont un atome d'hydrogène ou un radical alkyle linéaire ou ramifié comportant 2 à 20 atomes de C ou un radical cycloalkyle comportant 2 à 20 atomes de C ou un radical aryle comportant 6 à 15 atomes de C ou un radical aralkyle comportant 7 à 14 atomes de C.

3. Composition selon l'une quelconque des revendications précédentes, **caractérisée en ce que** le carbodiimide est le bis(2,6-diisopropylphényle)carbodiimide.

4. Composition selon l'une quelconque des revendications précédentes, **caractérisée en ce que** l'aminosilane pour l'adduit est un aminosilane de formule (III), 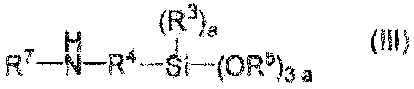 dans laquelle
R³, indépendamment les uns des autres, est un radical hydrocarboné monovalent, linéaire ou ramifié, comportant 1 à 8 atome(s) de C, en particulier un groupe méthyle ;
R⁴ est un radical hydrocarboné divalent, linéaire ou ramifié, comportant 1 à 12 atome(s) de C, qui présente éventuellement des portions cycliques et/ou éventuellement un ou plusieurs hétéroatomes, en particulier un ou plusieurs atomes d'azote ;
R⁵, indépendamment les uns des autres, est un radical hydrocarboné monovalent, linéaire ou ramifié comportant 1 à 5 atome(s) de C, en particulier un groupe méthyle, un groupe éthyle ou un groupe isopropyle ;
R⁷ est un atome d'hydrogène ou un radical hydrocarboné monovalent comportant 1 à 12 atome(s) de C, qui contient éventuellement des groupes éther, des groupes ester, des groupes nitrile, des groupes amino ou des groupes silane ; et
a est 0 ou 1 ou 2, préférablement 0 ou 1, en particulier 0.

5. Composition selon la revendication 4, **caractérisée en ce que** a est 0 ou 1, en particulier 0 ;
R³ est un groupe méthyle ;
R⁴ est un groupe alkylène linéaire comportant 1 à 5, préférablement 2 à 5, atome(s) de C, éventuellement comportant un groupe amino secondaire, en particulier un groupe 1,3-propylène ou un groupe 3-aza-1,6-hexylène ;
R⁵, indépendamment les uns des autres, est un groupe méthyle ou un groupe éthyle ou un groupe isopropyle, en particulier un groupe méthyle ou un groupe éthyle ; et
R⁷ est un atome d'hydrogène.

6. Composition selon l'une quelconque des revendications précédentes, **caractérisée en ce que** la composition, qui comprend un carbodiimide, comprend de plus au moins un aminosilane, en particulier au moins un aminosilane de formule (III).

7. Composition selon l'une quelconque des revendications précédentes, **caractérisée en ce que** la guanidine est une guanidine de formule (VI) et/ou une forme tautomère de celle-ci, 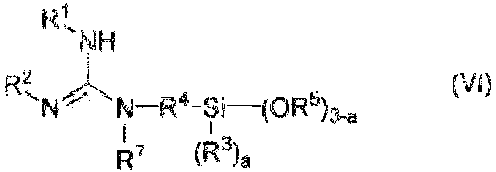 et R¹ et R² sont définis comme dans le carbodiimide de formule (I) et R³, R⁴, R⁵, R⁷ et a sont définis comme dans l'aminosilane de formule (III).

8. Composition selon l'une quelconque des revendications précédentes, **caractérisée en ce que** le polymère fonctionnalisé par silane présente des groupes terminaux de formule (II) 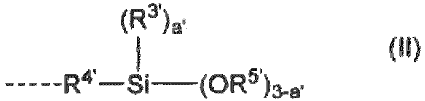 dans laquelle
R³', indépendamment les uns des autres, est un radical hydrocarboné monovalent, linéaire ou ramifié, comportant 1 à 8 atome(s) de C, en particulier un groupe méthyle ou un groupe éthyle ;
R⁴' est un radical hydrocarboné divalent, linéaire ou ramifié, comportant 1 à 12 atome (s) de C, qui présente éventuellement des portions cycliques et/ou éventuellement un ou plusieurs hétéroatomes, en particulier un ou plusieurs atomes d'azote, préférablement un groupe alkylène linéaire ou ramifié comportant 1 à 8 atome(s) de C, qui présente éventuellement un ou plusieurs atomes d'azote ;
R⁵', indépendamment les uns des autres, est un radical acyle, préférablement un radical acétyle, ou un radical hydrocarboné monovalent, linéaire ou ramifié, comportant 1 à 5 atome(s) de C, en particulier un groupe méthyle, un groupe éthyle ou un groupe isopropyle ; et
a' est 0 ou 1 ou 2, préférablement 0 ou 1, en particulier 0.

9. Composition selon l'une quelconque des revendications précédentes, **caractérisée en ce que** la composition est une colle ou un matériau d'étanchéité durcissant à l'humidité, en particulier un matériau d'étanchéité de construction, ou un revêtement durcissant à l'humidité.

10. Composition selon l'une quelconque des revendications précédentes, **caractérisée en ce que** la composition contient, par rapport à la composition totale, 10 à 80 % en poids, préférablement 15 à 70 % en poids, de polymère fonctionnalisé par silane, 15 à 70 % en poids, préférablement 20 à 65 % en poids d'une charge, 0 à 30 % en poids d'assouplissant, 0,1 à 10 % en poids d'un ou plusieurs silanes et 0,001 à 5 % en poids de catalyseur.

11. Guanidine de formule (VI), la formule (VI) étant définie comme dans la revendication 7.

12. Procédé pour la préparation d'une guanidine selon l'une quelconque des revendications 7 et 11, dans lequel au moins un carbodiimide et au moins un aminosilane sont transformés en un adduit, en présence d'un polymère fonctionnalisé par silane.

13. Utilisation d'un carbodiimide ou d'une guanidine selon la revendication 1, qui est un adduit d'un carbodiimide et d'un aminosilane, dans une composition, comprenant au moins un polymère fonctionnalisé par silane, en particulier pour l'abaissement du module E de cette composition à l'état durci.

14. Composition durcie, pouvant être obtenue par le durcissement d'une composition selon l'une quelconque des revendications 1 à 10 avec de l'eau, en particulier sous forme d'humidité de l'air.
